# EUROPÄISCHE PATENTANMELDUNG

(11) **EP 0 644 338 A1**
(43) Veröffentlichungstag der Anmeldung: **22.03.1995**
(21) Anmeldenummer: 94810538.2
(22) Anmeldetag: 20.09.1994
(51) Int. Cl.: F16B 12/46

(54) **Möbelbausatz**

(30) Priorität: 22.09.1993 CH 2862/93
(71) Anmelder: Inntegra AG, CH-4052 Basel (CH)
(72) Erfinder: Hendel, Siegfried, jun., D-68307 Mannheim (DE)
(74) Vertreter: Eder, Carl E.

(57) **Zusammenfassung**

Der Möbelbausatz besteht aus wahlweise senkrecht und waagrecht anzuordnenden Plattenelementen (20,21,22), die entlang ihrer Längsränder (6) mindestens eine Lochreihe aufweisen. Die Lochreihen der Plattenelemente sind dabei derart angeordnet und ausgebildet, dass der Abstand von Lochmitte zu Lochmitte der Plattendicke d entspricht und dass das erste Loch der mindestens einen Lochreihe einen Abstand von d/2 von einer der Breitseiten aufweist. Zudem besitzen alle Plattenelemente eine Breite von {n3d - d/2}, wobei n eine beliebige ganze Zahl ist. Der Bausatz umfasst ferner Verbindungswinkel (9) zur Verbindung der Plattenelemente (20,21,22). Diese weisen je zwei rechtwinklig zueinander stehende Schenkel auf, die mit acht bzw. zehn zur Aufnahme von Befestigungsschrauben dienenden Öffnungen versehen sind. Dieser Möbelbausatz gestattet es, aus sehr wenigen Bauteilen sehr viele Kombinationsmöglichkeiten zu schaffen, wobei auch insbesondere die eine Plattendicke d aufweisenden Plattenelemente mit Plattenelementen verbunden werden können, deren Plattendicke nicht d sondern 3d/4, d/2 oder d/4 ist.

## Beschreibung

Die Erfindung betrifft einen Möbelbausatz, bestehend aus senkrecht und waagrecht anzuordnenden Plattenelementen und Verbindungswinkeln, um die Plattenelemente miteinander zu verbinden.

Aus der deutschen Offenlegungsschrift 26 44 397 ist ein Möbelbausatz der vorgenannten Art bekannt. Dieser bekannte Möbelbausatz besteht aus miteinander verbindbaren Plattenelementen gleicher Dicke, die entlang ihrer beiden Längsränder je eine Lochreihe aufweisen. Jede Lochreihe ist dabei derart ausgebildet und angeordnet, dass der Abstand der Löcher voneinander und der Abstand des ersten und letzten Loches der Lochreihe von der Breitseite gleich der Plattendicke ist.

Dieser Möbelbausatz gestattet es, aus verhältnismässig wenigen unterschiedlichen Bauteilen ein Möbelstück zu schaffen. So können beispielsweise bei der Herstellung eines Kastens die einzelnen Plattenelemente ohne weiteres als Seiten- oder Rückwände oder sogar als Boden- oder Deckelemente verwendet werden. Zudem ist bei der aus der DE-OS 26 44 397 bekannten Bauweise immer sichergestellt, dass die Löcher der Lochreihen zweier senkrecht stehenden Plattenelemente miteinander fluchten, - dies auch dann, wenn eines der beiden Elemente auf einem als Boden eines Möbelstückes dienenden Bodenelement und das andere direkt auf dem Boden steht - so dass ohne weiteres waagrechte Zwischenelemente, wie beispielsweise Tablare, Schubladenschienen und dergleichen montiert werden können.

Bei diesem Möbelbausatz werden je zwei Plattenelemente mittels Verbindungswinkeln senkrecht miteinander verbunden. So können Plattenelemente derart miteinander verbunden werden, dass diese sich lediglich an ihren Längskanten oder Breitenkanten berühren oder dass die Stirnfläche des einen Plattenelementes vollständig an der die Innenseite eines Möbelstückes bildenden Frontfläche eines anderen Plattenelementes anliegt.

Der vorgenannte Möbelbausatz weist nun den Nachteil auf, dass die Plattenelemente nur auf zwei verschiedene Arten miteinander verbunden werden können, so dass sich dieser Bausatz nur in beschränkter Form zur Herstellung von beliebig ausbaubaren Möbeln eignet. Ein weiterer Nachteil dieses Möbelbausatzes besteht darin, dass alle Plattenelemente, die zur Herstellung eines Möbelstückes verwendet werden, die gleiche Dicke aufweisen müssen. So müssen zum Beispiel die eine Rückwand oder ein Türelement eines Kastens bildenden Plattenelemente gleich dick sein wie die übrigen Wandteile, was verschiedene Nachteile, wie eine unnötige Erhöhung des Leergewichtes des Kastens und/oder eine grosse Belastung der zum Tragen der Türelemente dienenden Scharniere zur Folge hat. Hierzu sei bemerkt, dass es zur Behebung der vorstehend genannten Nachteile an sich bekannt ist, Möbelstücke herzustellen, bei denen die Rückwand und/oder die Türelemente dünner sind als die Seitenwände oder Bodenelemente.

Ausgehend vom vorgenannten Möbelbausatz liegt nun der vorliegenden Erfindung die Aufgabe zugrunde, einen Möbelbausatz vorzuschlagen, der mehr als nur zwei Kombinationsmöglichkeiten zur Verbindung der Plattenelemente zulässt und bei dem nicht alle Plattenelemente die gleiche Dicke haben müssen. Dabei sollen mit einem Sortiment von gleichartigen Plattenelementen und einheitlichen Verbindungswinkeln beliebig ausbaubare Möbel, wie beispielsweise Wandschränke und Regale, zusammensetzbar sein, wobei jedes beliebige Plattenelement des Sortimentes sowohl als Seitenwand, Bodenwand oder Deckwand als auch als Türelement, Rückwand oder Zwischenwand verwendet werden kann.

Diese Aufgabe wird erfindungsgemäss durch einen Möbelbausatz mit den Merkmalen des Patentanspruches 1 gelöst, nämlich durch einen Möbelbausatz bestehend aus rechtwinklig zueinander anzuordnenden Plattenelementen und Verbindungswinkeln, die zwei mit mehreren Löchern versehene Schenkel aufweisen, wobei mindestens ein Teil der Plattenelemente eine Plattendicke d besitzt und alle Plattenelemente entlang ihren Längsrändern mit mindestens einer Lochreihe zum Einsetzen von Befestigungsschrauben versehen sind und wobei die mindestens eine Lochreihe derart angeordnet und ausgebildet ist, dass der Abstand von Lochmitte zu Lochmitte der vorgenannten Dicke d entspricht und dass das erste Loch der mindestens einen Lochreihe einen Abstand von d/2 von einer der Breitseite aufweist. Alle Plattenelemente besitzen dabei eine Breite von {n3d - d/2}, wobei n eine beliebige ganze Zahl ist, so dass die Plattenbreite beispielsweise 2,5d; 5,5d; 8,5d; 11,5d oder 14,5d betragen kann.

Vorteilhafte Ausgestaltungen sind Gegenstand des abhängigen Anspruches.

Nachfolgend wird nun anhand der Zeichnung die Erfindung näher erläutert.

In der Zeichnung zeigt
die Figur 1 eine Draufsicht auf ein Plattenelement,
die Figur 2 eine Draufsicht auf ein anderes Plattenelement,
die Figur 3 eine Ansicht eines Verbindungswinkels,
die Figur 4 einen Querschnitt einer Plattenverbindung bestehend aus fünf Plattenelementen und
die Figur 5 einen Längsschnitt durch einen Teil eines aus mehreren Plattenelementen bestehenden Regales.

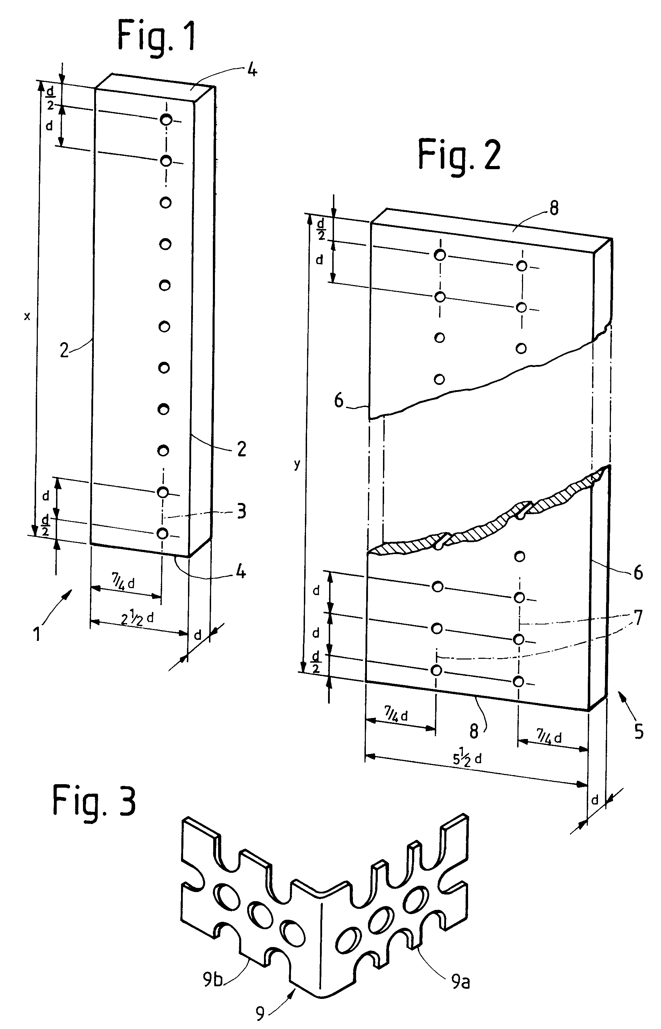

Das in der Figur 1 dargestellte und als ganzes mit 1 bezeichnete Plattenelement ist entlang seiner beiden Längsränder 2 mit einer Lochreihe 3 zum Einsetzen von Befestigungsschrauben versehen, wobei der Abstand von Lochmitte zu Lochmitte konstant ist und der Plattendicke d entspricht. Das Plattenelement 1 hat dabei eine Breite von 2,5d und eine Gesamtlänge von x, welche ein ganzes Vielfaches des Lochabstandes bzw. der Dicke d des Elementes 1 ist. Die Lochreihe 3 ist nun derart angeordnet, dass der Abstand zum einen Längsrand 7d/4 beträgt und dass das erste und letzte Loch der Lochreihe 3 je einen Abstand von d/2 von der Breitseite 4 aufweist.

Das in der Figur 2 dargestellte Plattenelement 5 hat eine Breite von 5,5d und weist entlang seiner beiden Längsränder 6 zwei Lochreihen 7 auf, die je einen Abstand von 7d/4 zu einem der beiden Längsrändern 6 aufweisen. Wie bei dem in der Figur 1 dargestellten Plattenelement 1 beträgt der Abstand zwischen je zwei Löcher einer Lochreihe d und der Abstand des ersten und letzten Loches jeder Reihe zur Breitseite 8 d/2. Das Plattenelement 5 hat schliesslich eine Gesamtlänge von y, welche - wie die Gesamtlänge des Plattenelementes 1 - ein ganzes Vielfaches der Dicke d des Elementes ist.

Zur Verbindung von Plattenelementen der erfindungsgemässen Art dient der in der Figur 3 dargestellte Verbindungswinkel 9. Der erste Schenkel 9a des Verbindungswinkels 9 ist dabei mit zehn, und der zweite Schenkel 9b mit acht Öffnungen versehen. Letztere sind symmetrisch in Bezug auf eine senkrecht zur Winkelkante verlaufende Symmetrielinie angeordnet und dienen zur Aufnahme von Befestigungsschrauben gleicher Dicke. Hierbei befinden sich je vier Öffnungen auf der Symmetrielinie der beiden Schenkel 9a, 9b, wobei der Abstand zwischen den Öffnungsmitten und der Winkelkante d/2, d, 3d/2 und 2d beträgt. Die übrigen Öffnungen sind als Ausnehmungen ausgestaltet, die von den zur Symmetrielinie parallelen Rändern ausgehen, wobei beim ersten Schenkel 9a der Abstand zwischen der Winkelkante und den Ausnehmungsmitten 3d/4, 5d/4 und 7d/4, beim zweiten Schenkel 9b aber 3d/4 und 3d/2 beträgt.

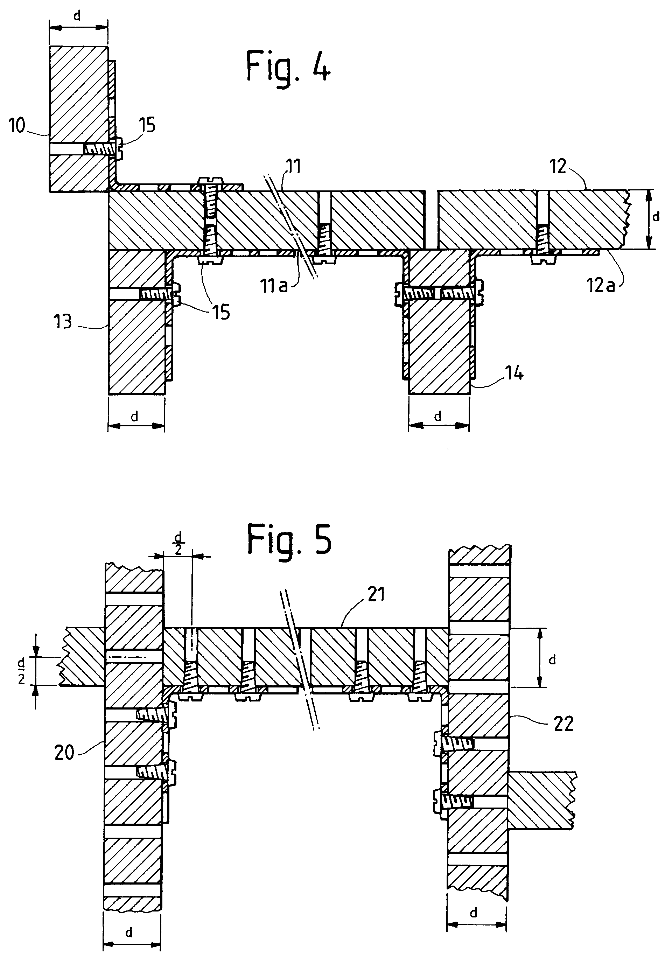

In der Figur 4 sind fünf an den Längsrändern miteinander verbundene Plattenelemente 10, 11, 12, 13 und 14 dargestellt. Hierbei entsprechen die Elemente 10, 13 und 14 dem in der Figur 1 dargestellten Plattenelement und die Elemente 11 und 12 einem Plattenelement mit einer Breite von beispielsweise 11,5d. Zudem weisen alle Plattenelemente die gleiche Plattendicke d auf. Zur Verbindung der Plattenelemente 10 - 14 dienen schliesslich Verbindungswinkel 9. Diese werden mit Befestigungsschrauben 15 in bekannter Art und Weise an den Plattenelementen lösbar befestigt. Wie aus der Figur 4 ersichtlich ist, können erfindungsgemässe Plattenelemente auf vier verschiedene Arten senkrecht miteinander verbunden werden. So sind die Plattenelemente 10, 11 und 13 derart miteinander verbunden, dass sich die Plattenelemente 10 und 11 lediglich an ihren Längskanten berühren und die Stirnfläche des Plattenelementes 13 vollständig an der Frontfläche lla des Plattenelementes 11 anliegt. Die zwei anderen Verbindungsarten sind auf der rechten Seite der Figur 4 dargestellt. Hierbei ist das Plattenelement 14 derart mit den Plattenelementen 11 und 12 verbunden, dass 1/4 der Stirnfläche des Plattenelementes 14 an der Frontfläche 11a des Elementes 11 und 2/4 der Stirnfläche an der Frontfläche 12a des Elementes 12 anliegt.

Der in der Figur 5 im Längsschnitt dargestellte Teil eines Regales zeigt drei miteinander verbundene Plattenelemente 20, 21 und 22. Diese weisen je eine Plattendicke d auf und sind mittels Verbindungswinkeln 9 miteinander verbunden. Aus der Figur 5 ist ersichtlich, dass - obwohl die Löcher der Lochreihen der beiden einander gegenüberliegenden, parallelen Plattenelemente 20 und 22 nicht miteinander fluchten - das waagrechte, beispielsweise als Tablar dienende Plattenelement 21 mittels den Verbindungswinkeln 9 an den beiden vertikalen Plattenelementen 21 und 26 befestigt werden kann.

Wie bereits erwähnt, weist der aus der deutschen Offenlegungsschrift 26 44 397 bekannte Möbelbausatz den Nachteil auf, dass alle zur Herstellung eines Möbelstückes verwendbaren Plattenelemente die gleiche Plattendicke aufweisen. Hierzu sei bemerkt, dass gemäss der vorliegenden Erfindung Plattenelemente mit einer Plattendicke d auch mit Elementen verbunden werden können, deren Plattendicke 3d/4, d/2 oder sogar d/4 beträgt. Letztere unterscheiden sich lediglich in ihrer Plattendicke von den vorstehend definierten und beschriebenen Plattenelementen, besitzen also eine Plattenbreite von (n3d - d/2), wobei n eine beliebige ganze Zahl ist, und mindestens eine entlang ihren Längsrändern verlaufende Lochreihe, die derart angeordnet und ausgebildet ist, dass der Abstand von Lochmitte zu Lochmitte der vorgenannten Dicke d entspricht und das erste Loch der mindestens einen Lochreihe einen Abstand von d/2 von einer der Breitseiten aufweist.

Es sei an dieser Stelle schliesslich noch darauf hingewiesen, dass die anhand der Figuren 1 bis 5 beschriebenen Plattenelemente nur eine Auswahl von möglichen Ausführungsformen der Erfindung darstellen und in verschiedener Hinsicht geändert werden können.

So besteht beispielsweise auch die Möglichkeit, die Plattenelemente zusätzlich noch mit mindestens einer senkrecht zu ihren Längsrändern verlaufenden Lochreihe zum Einsetzen von Befestigungsschrauben zu versehen, wobei das erste und letzte Loch dieser Lochreihe je einen Abstand von 7d/4 vom Längsrand aufweist und zu einer entlang der Längsränder verlaufenden Lochreihe gehört.

## Patentansprüche

1. Möbelbausatz mit Plattenelementen (1, 5, 10-14, 20-22) und Verbindungswinkeln (9), die zwei rechtwinklig zueinander stehende gelochte Schenkel (9a, 9b) aufweisen, wobei mindestens ein Teil der Plattenelemente (1, 5, 10-14, 20-22) eine Plattendicke d besitzt und alle Plattenelemente (1, 5, 10-14, 20-22) entlang ihren Längsrändern (2, 6) mit mindestens einer Lochreihe (3, 7) zum Einsetzen von Befestigungsschrauben versehen sind und der Abstand von Lochmitte zu Lochmitte der Plattendicke d entspricht, dadurch gekennzeichnet,
- dass die Plattendicke derjenigen Plattenelemente, deren Plattendicke nicht d ist, 3d/4, d/2 oder d/4 beträgt,
- dass das erste Loch der mindestens einen Lochreihe (3, 7) einen Abstand von d/2 von einer der Breitseite (4, 8) aufweist,
- dass die Plattenelemente (1, 5, 10-14, 20-22) eine Breite von {n3d - d/2} aufweisen, wobei n eine beliebige ganze Zahl ist,
- und dass der erste Schenkel (9a) des Verbindungswinkels (9) mit zehn, und der zweite Schenkel (9b) mit acht zur Aufnahme von Schrauben gleicher Dicke dienenden Öffnungen versehen ist, die jeweils derart symmetrisch in Bezug auf eine senkrecht zur Winkelkante verlaufenden Symmetrielinie angeordnet sind, dass vier von ihnen sich auf der Symmetrielinie befinden, wobei der Abstand zwischen der Öffnungsmitte und der Winkelkante d/2, d, 3d/2 und 2d beträgt während die übrigen Öffnungen als von der zur Symmetrielinie parallelen Rändern ausgehende Ausnehmungen ausgestaltet sind, wobei beim ersten Schenkel (9a) der Abstand zwischen der Winkelkante und den Ausnehmungsmitten 3d/4, 5d/4 und 7d/4, beim zweiten Schenkel (9b) aber 3d/4 und 3d/2 beträgt.

2. Zum Möbelbausatz nach Anspruch 1 gehörendes Plattenele ment, dadurch gekennzeichnet, dass es eine mindestens 5,5d betragende Breite aufweist und mindestens eine senkrecht zu ihren Längsrändern verlaufende Lochreihe zum Einsetzen von Befestigungsschrauben besitzt, wobei das erste und letzte Loch dieser Lochreihe je einen Abstand von 7d/4 vom Längsrand aufweist und zu einer entlang der Längsränder verlaufenden Lochreihe gehört.
